# EUROPÄISCHE PATENTSCHRIFT

(11) **EP 3 252 697 B1**
(45) Veröffentlichungstag und Bekanntmachung des Hinweises auf die Patenterteilung: **11.08.2021**
(21) Anmeldenummer: 16172462.0
(22) Anmeldetag: 01.06.2016
(51) Int. Cl.: G06Q 30/06, G06Q 20/04

(54) **VALIDATORVORRICHTUNG FÜR EIN TICKETSYSTEM**
VALIDATOR DEVICE FOR A TICKET SYSTEM
DISPOSITIF DE VALIDATION POUR UN SYSTEME DE TICKET

(43) Veröffentlichungstag der Anmeldung: 06.12.2017
(73) Patentinhaber: Scheidt & Bachmann GmbH, 41238 Mönchengladbach (DE)
(72) Erfinder: OELERT, Dipl.-Ing. Kai, 47877 Willich (DE)
(74) Vertreter: Cohausz & Florack

(56) Entgegenhaltungen:
- EP-A1- 2 930 696
- WO-A1-2014/174142
- FR-A1- 2 915 606
- US-A1- 2006 183 462
- US-A1- 2015 025 921

## Beschreibung

Die Erfindung betrifft eine Validatorvorrichtung für ein Ticketsystem, insbesondere für ein offenes Ticketsystem. Darüber hinaus betrifft die Erfindung ein Inspektionselement für eine Inspektionsvorrichtung, eine Inspektionsvorrichtung, eine Inspektionsanordnung, ein Ticketsystem und ein Verfahren, insbesondere zum Betreiben eines Ticketsystems.

Neben proprietären Medien ("closed loop"-Systeme) kommen bei Fahrschein- bzw. Ticketsystemen vermehrt so genannte offene Medien ("open loop"-Systeme) zum Einsatz. Auch hybride Ticketsysteme sind bekannt. Der Vorteil von offenen Architekturen gegenüber geschlossenen Architekturen liegt insbesondere darin, dass diese flexibler sind. Nutzer bzw. Fahrgäste können bei der Nutzung von einem Fahrzeug, insbesondere ein Transportfahrzeug, unterschiedliche Nutzeridentifikationselemente, wie Tokens, Chipkarten (Smartcards), Kreditkarten, Mobiltelefone, Personal Digital Assistants (PDAs), Tablet-PCs, integrierte Schaltungschips, elektronische Pässe, elektronische Ausweisdokumente, etc., für eine Authentifikation und Abrechnung nutzen. Es versteht sich, dass der Betreiber eines Ticketsystems vorgeben kann, welche Nutzeridentifikationselemente tatsächlich verwendet werden dürfen und welche ausgeschlossen sind.

Ticketsysteme basierend auf einer offenen Architektur werden beispielsweise in der US 2009/0121016 A1 und in der WO 2012/088582 A1 beschrieben. Ein derartiges Ticketsystem kann beispielweise in einem Fahrzeug, wie einem (öffentlichen) Bus oder einem (öffentlichen) Schienenfahrzeug, installiert sein.

Für eine Nutzung des Fahrzeugs kann sich ein Nutzer bei dem Betreten des Fahrzeugs mittels eines Nutzeridentifikationselements bei einer in (oder vor dem Fahrzeug) angeordnete Validatorvorrichtung anmelden (onboard validation) und beim Verlassen des Fahrzeugs in entsprechender Weise abmelden. Die Validatorvorrichtung kann über mindestens eine erste Nahbereichsschnittstelle verfügen, die eingerichtet ist, eine in dem Nutzeridentifikationselement gespeicherte Kennung aus dem Nutzeridentifikationselement zu empfangen. Die ausgelesene Kennung kann von dem Ticketsystem zur Identifizierung eines Nutzers und zum Beispiel zur Abrechnung der Nutzung des Fahrzeugs für die zurückgelegte Strecke zwischen Ein- und Ausstieg herangezogen werden.

Für jede ausgelesene Kennung wird in der Validatorvorrichtung ein Nutzerdatensatz angelegt, der zumindest alle relevanten Daten für eine Abrechnung der Nutzung des Fahrzeugs umfasst. Der Nutzerdatensatz kann zumindest teilweise gehasht sein. Die Validatorvorrichtung weist ein Kommunikationsmodul auf, um die Nutzerdatensätze an eine entfernt angeordnete zentrale Rechenvorrichtung (auch "back-office" genannt) zu übertragen. Beispielweise kann ein Mobilfunknetz zur Übertragung genutzt werden. Die entfernt angeordnete zentrale Rechenvorrichtung in Form von einem oder mehreren Server(n) speichert sämtliche Nutzerdatensätze und kann eine Nutzungsabrechnung durchführen oder zumindest initiieren.

Um eine missbräuchliche Nutzung eines Transportsystems zumindest zu reduzieren, werden die Nutzer von Fahrzeugen von so genannten Inspektoren beispielweise im Fahrzeug kontrolliert. Aus dem Stand der Technik ist es bekannt, zur Kontrolle bzw. Inspektion eine Inspektionsvorrichtung einzusetzen.

Bei der Nutzung von proprietären Medien als Nutzeridentifikationselement kann eine Validatorvorrichtung eine regelkonforme Validierung durch eine Veränderung des Nutzeridentifikationselements dokumentieren. Im einfachsten Fall ist das ein Entwerteraufdruck auf einem Papierticket, den ein Inspektor optisch prüfen kann. Elektronisch lesbare proprietäre Nutzeridentifikationselemente, wie z.B. proprietäre Magnetstreifentickets oder proprietäre Smart Cards, werden bei einer Validierung mit entsprechenden Validierungsdaten beschrieben, so dass die ordnungsgemäße Nutzung durch einen Inspektor mittels einer Inspektionsvorrichtung direkt aus dem Nutzeridentifikationselement elektronisch gelesen werden kann.

Bei der Nutzung von offenen Medien als Nutzeridentifikationselemente ist diese Inspektion schwieriger, da es in der Regel nicht erlaubt ist, dass eine Validierungsvorrichtung auf das Nutzeridentifikationselement, beispielweise eine kontaktlose Kreditkarte, zurückschreibt. Die Information, ob ein Nutzeridentifikationselement (vor Fahrtantritt) regelkonform validiert wurde, ist auf dem Nutzeridentifikationselement selbst also nicht vorhanden. Um eine Bewertung darüber abzugeben, ob ein Nutzeridentifikationselement regelkonform validiert wurde, muss eine Inspektionsvorrichtung möglichst "in Echtzeit" wissen, welche Nutzeridentifikationselemente noch an den Validierungsvorrichtungen des Ticketsystems benutzt wurden.

Die Inspektionsvorrichtung verfügt für einen Inspektionsprozess daher über ein weiteres Kommunikationsmodul und eine Nahbereichsschnittstelle. Über die Nahbereichsschnittstelle wird die Kennung aus dem zu inspizierenden Nutzeridentifikationselement des Nutzers ausgelesen. Mit dem Kommunikationsmodul lädt die Inspektionsvorrichtung von der entfernt angeordneten zentralen Rechenvorrichtung über eine Mobilfunk-Verbindung Nutzerdatensätze herunter und speichert sie lokal oder greift auf diese zu. Dann vergleicht die Inspektionsvorrichtung eine ausgelesene Kennung mit den Nutzerdaten. Ist das Vergleichsergebnis negativ, wird auf einen Missbrauch geschlossen und es können entsprechende Maßnahmen veranlasst werden. Bei einem positiven Vergleichsergebnis kann auf einen berechtigten Nutzer geschlossen werden.

Bei derartigen Ticketsystemen kommt es während des Inspektionsverfahrens immer wieder zu dem Problem, dass die Inspektion zu einem falschen negativen Ergebnis führt. Ein Grund dafür, dass eine von der Identifikationsvorrichtung ausgelesene Kennung keinem Nutzerdatensatz zugeordnet werden kann, kann eine Laufzeitverzögerung bei der Übertragung eines Nutzerdatensatzes von der Validatorvorrichtung an die Rechenvorrichtung sein. So kann es bis zu 5 min ab der Auslesung der Kennung aus einem Identifikationselement dauern, bis ein Nutzerdatensatz für diese Kennung tatsächlich von der entfernt angeordneten Rechenvorrichtung empfangen wurde. Vorher hat daher auch die Inspektionsvorrichtung keinen Zugriff auf diesen Nutzerdatensatz, so dass es zu einem falschen negativen Inspektionsergebnis kommen kann.

Eine weitere Ursache für ein fehlerhaftes Inspektionsergebnis kann sein, dass keine oder nur eine unzureichende Kommunikationsverbindung zwischen der Inspektionsvorrichtung und der entfernt angeordneten zentralen Rechnervorrichtung aufgebaut werden kann. So kann beispielsweise ein Fahrzeug geographische Bereiche passieren, in denen das genutzte Mobilfunknetz nur mit einer unzureichenden Qualität zur Verfügung steht.

Die WO 2014/174142 A1 offenbart ein Ticketsystem 100 mit einer Mehrzahl von Validatorvorrichtungen, einem Backend-System, Nutzergeräten, umfassend ein digitales Ticket, sowie eine Ticketinspektionsvorrichtung und ein Ticketinspektionselement für einen Inspektor. Die Druckschrift US 2015/0025921 A1 betrifft ein System, umfassend einen Fahrzeugserver, einen Backendserver, Nutzergeräte, Tags und eine Inspektionsvorrichtung, wobei die Inspektionsvorrichtung die für einen Inspektionsprozess erforderlichen Daten von dem Backendserver erhält. Die Druckschrift FR 2 915 606 A1 betrifft ein Zugangskontrollverfahren für eine Veranstaltung oder eine Dienstleistung. Schließlich ist aus der EP 2 930 696 A1 ein Verfahren zur Erfassung und Bezahlung von Parkvorgängen in Parkeinrichtungen bekannt.

Daher liegt der Erfindung die Aufgabe zugrunde, eine Validatorvorrichtung für ein Ticketsystem zur Verfügung zu stellen, welche die Zuverlässigkeit der Inspektionsergebnisse eines Inspektionsverfahrens verbessert.

Die zuvor hergeleitete und aufgezeigte Aufgabe wird gemäß einem ersten Aspekt der Erfindung durch eine Validatorvorrichtung gemäß Anspruch 1 gelöst. Die Validatorvorrichtung für ein Ticketsystem umfasst mindestens eine erste Nahbereichsschnittstelle eingerichtet zum Empfangen von mindestens einer in einem Inspektionselement gespeicherten Inspektionskennung. Die Validatorvorrichtung umfasst mindestens ein Authentifizierungsmodul eingerichtet zum Überprüfen der Authentizität der empfangenen Inspektionskennung. Die Validatorvorrichtung umfasst mindestens ein Schlüsselmodul eingerichtet zum Bereitstellen von einem einen Zugang zu einem Datennetz ermöglichenden Kommunikationsdatensatz bei einem positiven Authentifizierungsergebnis, derart, dass der Kommunikationsdatensatz von dem Inspektionselement empfangbar ist.

Indem, im Gegensatz zum Stand der Technik, ein Kommunikationsdatensatz für den Zugriff auf ein sicheres Datennetz einem Inspektionselement bereitgestellt wird, kann der Kommunikationsdatensatz genutzt werden, um eine weitere, gesicherte Kommunikationsverbindung zwischen der Validatorvorrichtung und einer Inspektionsvorrichtung aufzubauen, um insbesondere (aktuelle) Nutzerdatensätze, die in der Validatorvorrichtung gespeichert sind, an die Inspektionsvorrichtung zu übertragen. Eine Kommunikationsverbindung zwischen der Inspektionsvorrichtung und einer entfernt angeordneten (zentralen) Rechenvorrichtung kann entfallen. Auch kann ein aufwendiges Schlüsselmanagement für die gesicherte Kommunikationsverbindung entfallen. Gleichzeitig kann die Zuverlässigkeit der Inspektionsergebnisse eines Inspektionsverfahrens verbessert werden.

Die Validatorvorrichtung kann Teil eines Ticketsystems sein und beispielsweise in einem Fahrzeug oder außerhalb eines Fahrzeugs, wie in einem Eingangsbereich einer Haltestation, Bahnhofs, Flughafen, etc., angeordnet sein. Bei einem Fahrzeug kann es sich um ein beliebiges Transportfahrzeug eines Personentransportsystems handeln, dessen (vorübergehende) Nutzung durch einen Fahrgast bzw. Nutzer eine Authentifizierung erfordert. Beispielhafte und nicht abschließende Fahrzeuge umfassen Straßenfahrzeuge, wie Busse oder Autos, Schienenfahrzeuge, wie S-Bahnen, Straßenbahnen oder U-Bahnen, Wasserfahrzeuge oder Flugzeuge. Das Ticketsystem basiert insbesondere auf einer offenen Architektur oder einem Hybridsystem aus offenem und geschlossenem Ticketsystem.

Die Validatorvorrichtung umfasst eine erste Nahbereichsschnittstelle eingerichtet zum Empfangen von mindestens einer in einem Inspektionselement gespeicherten Inspektionskennung. Eine Inspektionskennung ist insbesondere eine eindeutige Kennung, beispielsweise ein Zeichencode, die dem Inspektionselement und/oder dem Inspektor eindeutig zugeordnet ist. Vorzugsweise kann die Inspektionskennung irreversibel in einer ersten Speichereinheit des Inspektionselements gespeichert sein.

Die erste Nahbereichsschnittstelle kann gemäß einer bevorzugten Ausführungsform eine NFC (Nearfield Communication) Schnittstelle sein. Aufgrund der hohen Übertragungssicherheit bei NFC-Verbindungen ist eine NFC-Schnittstelle bevorzugt. Eine NFC-Schnittstelle und/oder Verbindung kann konform mit den Vorgaben der Open Standard for Public Transport (OSPT) Alliance betrieben werden. Alternativ zu einer NFC-Schnittstelle kann als erste Nahbereichsschnittstelle auch eine Infrarot-Schnittstelle, Bluetooth-Schnittstelle, WLAN-Schnittstelle, etc. vorgesehen sein. Weiter alternativ kann die erste Nahbereichsschnittstelle als drahtgebundene Datenschnittstelle ausgeführt sein, mit der ein Datendialog zwischen der Inspektionsvorrichtung und der Validatorvorrichtung betrieben wird. Eine solche drahtgebundene Datenschnittstelle kann z.B. als USB-, RS232-, RS485-Schnittstelle, drahtgebundenes LAN oder als proprietär entwickelte, drahtgebundene Datenschnittstelle ausgeführt sein.

Nach einem Empfang der Inspektionskennung führt die Validatorvorrichtung eine Authentifizierungsprüfung durch. Vorzugsweise kann eine Positivliste von Inspektionskennungen in der Validatorvorrichtung hinterlegt sein. Ein Authentifizierungsmodul, insbesondere in Form eines Vergleichsmoduls, kann durch einen Abgleich der empfangenen Inspektionskennung mit den gespeicherten Inspektionskennungen die Authentizität der empfangenen Inspektionskennung prüfen. Ein positives Authentifizierungsergebnis liegt in diesem Fall dann vor, wenn eine zu der empfangenen Inspektionskennung korrespondierende gespeicherte Inspektionskennung detektiert wird. Andernfalls ist das Authentifizierungsergebnis negativ.

Die Positivliste kann aktualisierbar gebildet sein. Insbesondere kann die Liste beispielsweise bei Verlust eines Inspektionselements entsprechend aktualisiert werden. Die Aktualisierung kann durch eine entfernt angeordnete zentrale Rechenvorrichtung gesteuert werden. Es versteht sich, dass andere Authentifizierungsprüfungen alternativ oder zusätzlich durchgeführt werden können.

Insbesondere nur bei einem positiven Authentifizierungsergebnis stellt ein Schlüsselmodul der Validatorvorrichtung einen Kommunikationsdatensatz bereit. Der Kommunikationsdatensatz umfasst Informationen für einen (gesicherten) Zugang zu einem Datennetz, wie einem Bluetooth-Netz oder ein WLAN-Netz. Beispielsweise kann das Ticketsystem, insbesondere die Validatorvorrichtung (aber auch eine separate Kommunikationsvorrichtung des Ticketsystems) eine weitere Schnittstelle aufweisen. Der Kommunikationsdatensatz umfasst Daten, die für den Aufbau einer Nahbereichskommunikationsverbindung mit der weiteren Nahbereichsschnittstelle erforderlich sind. Die weitere Schnittstelle kann vorzugsweise eine Nahbereichsschnittstelle sein, welche eine insbesondere im Vergleich zu einer ersten Nahbereichsschnittstelle, wie eine NFC-Schnittstelle, höhere Datenübertragungsrate bereitstellt. Bevorzugt ist die weitere Nahbereichsschnittstelle eine WLAN-Schnittstelle. Alternativ kann die zweite Nahbereichsschnittstelle auch eine andere Schnittstelle sein, wie eine Bluetooth-Schnittstelle.

Der Kommunikationsdatensatz wird derart von dem Schlüsselmodul bereitgestellt, dass er von dem Inspektionselement insbesondere über die erste Nahbereichsschnittstelle und/oder eine weitere Schnittstelle der Validatorvorrichtung empfangen werden kann. Vorzugsweise kann der Kommunikationsdatensatz derart bereitgestellt werden, dass dieser von der ersten Nahbereichsschnittstelle an eine zu der ersten Nahbereichsschnittstelle korrespondierende Nahbereichsschnittstelle des Inspektionselements übertragen wird. Insbesondere kann ein für die Übertragung der Inspektionskennung aufgebaute erste Nahbereichsverbindung auch für die Übertragung des Kommunikationsdatensatzes genutzt werden.

Alternativ oder zusätzlich kann die Validatorvorrichtung über eine weitere Schnittstelle verfügen. Beispielsweise kann eine andere Nahbereichsschnittstelle oder ein Display als weitere Schnittstelle vorgesehen sein. So kann der Kommunikationsdatensatz in Form eines QR (Quick Response)-Codes auf einem Display angezeigt werden.

Um in einfacher Weise eine empfangene Inspektionskennung von einer sonstigen Kennung zu unterscheiden, kann ferner eine entsprechende Information zusammen mit der Identifikationskennung übertragen werden und/oder die Inspektionskennung selber eine entsprechende Information umfassen.

Die Validatorvorrichtung kann eingerichtet sein, (in herkömmlicher Weise) eine in einem Nutzeridentifikationselement gespeicherte Kennung auszulesen. Die Kennung kann eine Identifikationskennung sein, die dem Nutzer des Nutzeridentifikationselements und/oder dem Nutzeridentifikationselement eindeutig zugeordnet ist. Vorzugsweise kann die erste Nahbereichsschnittstelle, insbesondere eine NFC-Schnittstelle, eingerichtet sein, Nutzeridentifikationselemente auszulesen. Alternativ oder zusätzlich kann die Validatorvorrichtung hierfür eine oder mehrere weitere Schnittstellen umfassen. Die Validatorvorrichtung generiert basierend auf einer empfangenen Kennung und vorzugsweise weiteren Daten, wie dem Empfangszeitpunkt der Kennung (Zeitstempel) und/oder dem Empfangsort (z.B. Haltestation), einen Nutzerdatensatz. Der Nutzerdatensatz kann weitere Sicherheitselemente umfassen. Dieser Nutzerdatensatz wird in einem Speichermodul der Validatorvorrichtung gespeichert und vorzugsweise über ein Kommunikationsmodul an die entfernt angeordnete zentrale Rechenvorrichtung zur weiteren Verarbeitung übertragen. Die zentrale Rechenvorrichtung kann dann beispielsweise die Nutzerdaten prüfen und eine Abrechnung veranlassen. In der Validatorvorrichtung kann mittels einer (aktualisierbaren) Negativliste (lediglich) ein Vergleich einer empfangenen Kennung mit den in der Negativliste hinterlegten Kennungen durchgeführt werden, um insbesondere die Nutzung eines Nutzeridentifikationselement abzulehnen, falls dessen Kennung auf der Negativliste vorhanden ist.

Darüber hinaus umfasst die Validatorvorrichtung ein Speichermodul eingerichtet zum Speichern von mindestens einem zu einer von einem Nutzeridentifikationselement empfangenen Kennung korrespondierenden Nutzerdatensatz. Das Speichermodul ist zum Bereitstellen des mindestens einen gespeicherten Nutzerdatensatzes eingerichtet, derart, dass der mindestens eine Nutzerdatensatz von einer Inspektionsvorrichtung über das Datennetz empfangbar ist. Ein zu übertragender Nutzerdatensatz kann zumindest eine zu der Kennung korrespondierende Information und/oder die Kennung selbst zumindest teilweise umfassen. Insbesondere ist der Nutzerdatensatz geeignet, um in einem Inspektionsprozess eine ausgelesene Kennung aus einem Nutzeridentifikationselement zu prüfen. Vorzugsweise können sämtliche Nutzerdatensätze in Form einer Liste mittels des Datennetzes, wie ein WLAN-Datennetz, übertragen werden. Beispielsweise können die Daten über die weitere Schnittstelle, insbesondere eine WLAN-Schnittstelle, übertragen werden. Das mindestens eine Speichermodul, welches von der Validatorvorrichtung umfasst ist, kann in einem Gehäuse der Validatorvorrichtung intergiert sein und/oder außerhalb der Validatorvorrichtung angeordnet und über eine (drahtgebundene) Kommunikationsverbindung mit der Validatorvorrichtung verbunden sein.

Gemäß einer Ausführungsform der erfindungsgemäßen Validatorvorrichtung kann der Kommunikationsdatensatz zumindest eine Datennetzkennung des Datennetzes umfassen. Beispielsweise kann die Datennetzkennung eine Datennetz-ID (Identifier) und/oder Schnittstellen-ID der weiteren Schnittstelle und/oder eine Schnittstellenadresse der weiteren Schnittstelle der Validatorvorrichtung sein. Bei einem bevorzugten WLAN (Wireless Local Area Network) Datennetz kann der Kommunikationsdatensatz eine statische SSID (Service Set Identifier) umfassen. Zur Erhöhung der Sicherheit kann anstelle der statischen SSID eine teilrandomisierte SSID oder eine randomisierte SSID verwendet werden. Besonders bevorzugt umfasst der Kommunikationsdatensatz ferner mindestens einen kryptographischen Schlüssel. Der Schlüssel kann ein Passwort, insbesondere ein zufällig generiertes Passwort, sein (z.B. WLAN-Passwort, Bluetooth-Passwort). Hierdurch kann die Kommunikationssicherheit für die weitere Kommunikationsverbindung weiter erhöht werden.

Grundsätzlich kann das Datennetz, insbesondere die weitere Schnittstelle der Validatorvorrichtung, aus Sicherheitsgründen im Normalbetrieb deaktiviert sein. Insbesondere wird hierdurch ein unberechtigtes Eindringen in das Datennetz verhindert. Um das Datennetz insbesondere für die Übertragung von bevorzugt sämtlichen (aktuellen) im Speichermodul der Validatorvorrichtung gespeicherten Nutzerdatensätzen zu nutzen, kann gemäß einer bevorzugten Ausführungsform die Validatorvorrichtung mindestens ein Aktivierungsmodul eingerichtet zum Aktivieren des Datennetzes, wie die weitere Schnittstelle, nach einem positiven Authentifizierungsergebnis umfassen. Insbesondere bevorzugt kann die Aktivierungsdauer begrenzt sein. Gemäß einer Ausführungsform der erfindungsgemäßen Validatorvorrichtung kann das Aktivierungsmodul zum Aktivieren des Datennetzes, wie die weitere Schnittstelle, für eine vorgegebene Zeitdauer eingerichtet sein. Die vorgegebene Zeitdauer kann insbesondere abhängen von einer geschätzten und/oder getesteten maximalen Anzahl von Nutzerdatensätzen, von deren jeweiliger Größe und von der zur Verfügung stehenden Datenübertragungsrate. Die Zeitdauer kann zwischen 2 min und 15 min, insbesondere zwischen 3 min und 10 min liegen. Alternativ oder zusätzlich kann vorgesehen sein, dass nach der Übertragung des letzten aktuellen Nutzerdatensatz automatisch oder aufgrund einer entsprechenden Nachricht von der Inspektionsvorrichtung das Datennetz, wie die weitere Schnittstelle, wieder deaktiviert wird. Hierdurch kann sichergestellt werden, dass einerseits das Datennetz für eine Übertragung sämtlicher Nutzerdatensätze ausreichend lang aktiviert ist und dass andererseits nach der Datenübertragung das Datennetz wieder deaktiviert ist.

Alternativ oder zusätzlich kann vorgesehen sein, dass das Datennetz bzw. die weitere Schnittstelle für andere Geräte verborgen ist.

In der Praxis eines Inspektionsprozesses tritt das Problem auf, dass ein Nutzer, der ein Fahrzeug unberechtigt nutzt, sein Nutzeridentifikationselement noch schnell an eine Validatorvorrichtung hält, wenn er einen Inspektor entdeckt. Um dies zu verhindern, wird gemäß einer weiteren Ausführungsform vorgeschlagen, dass die Validatorvorrichtung mindestens ein Sperrmodul eingerichtet zum Sperren des Empfangs von einer in einem Nutzeridentifikationselement gespeicherten Kennung nach einem positiven Authentifizierungsergebnis der Inspektionskennung umfasst. Bevorzugt unmittelbar (zumindest < 10 s, insbesondere zumindest < 2 s) nach der Erstellung des positiven Authentifizierungsergebnisses kann beispielsweise ein Steuerungsmodul einer Validatorvorrichtung angesteuert werden, um das Einlesen von weiteren Kennungen von Nutzeridentifikationselementen beispielsweise über die erste und/oder eine andere Nahbereichsschnittstelle zu sperren.

Das Sperrmodul kann vorzugsweise eingerichtet sein, eine Sperrnachricht auch an mindestens eine weitere, vorzugsweise sämtliche weiteren Validatorvorrichtung(en), die mit der Validatorvorrichtung des Sperrmoduls verbunden sind, zu übertragen. Hierdurch wird eine Sperrung an bevorzugt sämtlichen Validatorvorrichtung(en) eines Ticketsystems, wie einem in einem Fahrzeug installierten Ticketsystem, bewirkt. Nach Beendigung des Inspektionsprozess kann der Empfang wieder durch die Inspektionsvorrichtung beispielsweise über eine (noch) vorhandene weitere Nahbereichsverbindung (z.B. WLAN-Verbindung) oder durch ein erneutes Auslesen einer Inspektionskennung (ggf. mit zusätzlicher manueller Bestätigung durch einen Inspektor) bewirkt werden. Auch kann die Sperrung an der nächsten Haltestation aufgehoben werden. Bevorzugt kann vorgesehen sein, dass das Sperrmodul bei Detektion einer Öffnung einer Fahrzeugtür den Empfang von Kennungen von Nutzeridentifikationselementen freigibt. Anschließend kann ein Inspektionselement in zuvor beschriebener Weise durch Auslesen einer Inspektionskennung den Inspektionsprozess starten und beispielsweise eine erneute Sperrung bewirken.

Ein weiterer Aspekt der Erfindung ist ein Inspektionselement für eine Inspektionsvorrichtung nach Anspruch 7. Das Inspektionselement umfasst mindestens eine erste Speichereinheit eingerichtet zum Speichern von mindestens einer Inspektionskennung. Das Inspektionselement umfasst mindestens eine Nahbereichsschnittstelle eingerichtet zum Übertragen der Inspektionskennung an eine erste Nahbereichsschnittstelle einer Validatorvorrichtung. Das Inspektionselement ist eingerichtet zum Empfangen von mindestens einem von der Validatorvorrichtung bereitgestellten und einen Zugang zu einem Datennetz ermöglichenden Kommunikationsdatensatz der Validatorvorrichtung.

Beispielhafte und nicht abschließende Inspektionselemente sind insbesondere Tokens, Chipkarten (Smartcards), Mobiltelefone, Personal Digital Assistants (PDAs), Tablet-PCs, integrierte Schaltungschips, elektronische Pässe, elektronische Ausweisdokumente oder dergleichen. Ein Inspektionselement (oder ein Nutzeridentifikationselement) kann entsprechend der MIFARE Chipkartentechnik oder dem internationalen eTicketsystem-Standard Calypso arbeiten.

Das Inspektionselement weist eine erste Speichereinheit auf, in dem zumindest die Inspektionskennung gespeichert ist. Insbesondere ist die Inspektionskennung irreversibel in der Speichereinheit einprogrammiert.

Die Nahbereichsschnittstelle des Inspektionselements ist eingerichtet, eine erste Nahbereichsverbindung mit einer ersten Nahbereichsschnittstelle einer insbesondere zuvor beschriebenen Validatorvorrichtung herzustellen. Vorzugsweise ist die Nahbereichsschnittstelle des Inspektionselements eine NFC-Schnittstelle. Insbesondere kann die NFC-Schnittstelle des Inspektionselements eine passive NFC-Schnittstelle sein. In diesem Fall ist die erste NFC-Schnittstelle der Validatorvorrichtung als aktive NFC-Schnittstelle ausgebildet. Es versteht sich, dass eine NFC-Kommunikation zwischen zwei Elementen in verschiedenen Modi (Aktiv/Passiv Modus, Peer-to-Peer Modus und Card Emulation Modus) durchgeführt werden kann und die beteiligten Schnittstellen entsprechend konfiguriert sein können.

Über die Nahbereichsschnittstelle des Inspektionselements wird an die Validatorvorrichtung die gespeicherte Inspektionskennung übertragen. Vorzugsweise empfängt das Inspektionselement über seine Nahbereichsschnittstelle den zuvor beschriebenen Kommunikationsdatensatz. Alternativ oder zusätzlich kann vorgesehen sein, dass eine weitere Schnittstelle genutzt wird, um den Kommunikationsdatensatz zu erfassen.

Unter einer Nahbereichsschnittstelle des Inspektionselements ist insbesondere auch eine Nahbereichsschnittstelle einer anderen Vorrichtung (z.B. einer Inspektionsvorrichtung) zu verstehen, die von dem Inspektionselement verwendet werden kann. Beispielsweise kann das Inspektionselement in der anderen Vorrichtung integriert sein. Entsprechendes gilt für eine evtl. weitere Schnittstelle.

Gemäß einer ersten Ausführungsform des erfindungsgemäßen Inspektionselements kann das Inspektionselement zum Bereitstellten des empfangenen Kommunikationsdatensatzes eingerichtet sein, derart, dass der Kommunikationsdatensatz von der Inspektionsvorrichtung (insbesondere über die Nahbereichsschnittstelle des Inspektionselements und/oder eine weitere Schnittstelle des Inspektionselements) empfangbar ist. Insbesondere kann eine NFC-Verbindung zwischen der NFC-Schnittstelle des Inspektionselements und einer NFC-Schnittstelle einer Inspektionsvorrichtung hergestellt werden. Der Kommunikationsdatensatz kann aus der weiteren Speichereinheit ausgelesen und über die NFC-Schnittstelle an die Inspektionsvorrichtung übertragen werden. Alternativ oder zusätzlich kann als weitere Schnittstelle die zuvor beschriebene weitere Nahbereichsschnittstelle des Inspektionselements für die Übertragung verwendet werden. Für den Fall, dass das Inspektionselement in einer Inspektionsvorrichtung integriert ist, kann die weitere Schnittstelle eine interne (drahtgebundene) Schnittstelle (z.B. ein Bus) zwischen Inspektionselement und Inspektionsvorrichtung sein.

Um das Inspektionselement möglichst einfach zu gestalten, kann das Inspektionselement vorzugsweise nur über eine Nahbereichsschnittstelle, insbesondere eine NFC-Schnittstelle, verfügen.

Ein noch weiterer Aspekt der Erfindung ist eine Inspektionsvorrichtung nach Anspruch 9 für ein Ticketsystem. Die Inspektionsvorrichtung umfasst mindestens eine erste Schnittstelle eingerichtet zum Empfangen von mindestens einem einen Zugang zu einem Datennetz ermöglichenden Kommunikationsdatensatz einer Validatorvorrichtung. Die Inspektionsvorrichtung umfasst mindestens eine zweite Schnittstelle eingerichtet zum Herstellen einer Kommunikationsverbindung mit dem Datennetz basierend auf dem empfangenen Kommunikationsdatensatz. Die zweite Schnittstelle ist zum Empfangen von mindestens einem Nutzerdatensatz von der Validatorvorrichtung über die hergestellte Kommunikationsverbindung eingerichtet.

Die erste Schnittstelle der Inspektionsvorrichtung ist insbesondere eingerichtet, den Kommunikationsdatensatz von dem Inspektionselement zu empfangen. Die Schnittstelle kann eine interne (drahtgebundene) Schnittstelle sein, wenn das Inspektionselement in der Inspektionsvorrichtung integriert ist, oder eine Nahbereichsschnittstelle sein, wenn das Inspektionselement als separates Element gebildet ist. Vorzugsweise kann die Nahbereichsschnittstelle der Inspektionsvorrichtung eine NFC-Schnittstelle sein.

Ferner umfasst die Inspektionsvorrichtung eine zweite Schnittstelle, um eine Kommunikationsverbindung mit dem Datennetz herzustellen. Insbesondere kann die zweite Schnittstelle der Inspektionsvorrichtung zu der weiteren Nahbereichsschnittstelle der Validatorvorrichtung oder einer anderen Kommunikationsvorrichtung korrespondieren. Um eine Kommunikationsverbindung mit dem Datennetz herzustellen, werden die zuvor beschriebenen Daten des zuvor empfangenen Kommunikationsdatensatzes genutzt. Nach Herstellung der Kommunikationsverbindung kann insbesondere die Inspektionsvorrichtung die Übertragung des mindestens einen Nutzerdatensatzes, vorzugsweise von sämtlichen (relevanten) Nutzerdatensätzen, bewirken. Insbesondere kann hierfür ein proprietäres Protokoll genutzt werden. Relevante Nutzerdatensätze sind insbesondere sämtliche Nutzerdatensätze der letzten X Stunden, der letzten n-Haltestellen oder dergleichen. Der mindestens eine Grenzwert kann vorgegeben sein.

Ein weiterer Aspekt der Erfindung ist eine Inspektionsanordnung nach Anspruch 10 für ein Ticketsystem umfassend mindestens ein zuvor beschriebenes Inspektionselement und mindestens eine zuvor beschriebene Inspektionsvorrichtung.

Die Inspektionsanordnung kann durch eine Inspektionsvorrichtung mit (fest) integriertem Inspektionselement oder durch zwei separate Elemente gebildet sein. Ein separates Inspektionselement kann für eine oder mehrere Inspektionsvorrichtung(en) genutzt werden. Ein Inspektionselement wird insbesondere von einer Inspektionsvorrichtung als vertrauensvolle Instanz angesehen. Insbesondere ist eine bidirektionale Vertrauensstellung zwischen Inspektionselement und Inspektionsvorrichtung gegeben.

Ein noch weiterer Aspekt der Erfindung ist ein Ticketsystem nach Anspruch 11. Das Ticketsystem, insbesondere ein offenes Ticketsystem oder ein hybrides Ticketsystem, umfasst mindestens eine zuvor beschriebene Validatorvorrichtung und mindestens eine zuvor beschriebene Inspektionsanordnung. Vorzugsweise kann das erfindungsgemäße Ticketsystem auf einem bereits installierten Ticketsystem aufbauen und insbesondere die bereits vorhandenen Schnittstellen (NFC und WLAN) nutzen.

Ein Ticketsystem kann zwei oder mehr Validatorvorrichtungen umfassen. Bei einem Fahrzeug kann beispielsweise in jedem Eingangsbereich des Fahrzeugs mindestens eine Validatorvorrichtung angeordnet sein. Vorzugsweise sind zumindest zwei, vorzugsweise sämtliche Validatorvorrichtungen eines Ticketsystems über eine drahtgebundene und/oder drahtlose Verbindung miteinander verbunden. Gemäß einer Ausführungsform kann insbesondere vorgesehen sein, dass Nutzungsdatensätze zwischen zumindest zwei, vorzugsweise sämtlichen Validatorvorrichtungen synchronisiert werden. Eine entsprechende Datensynchronisation kann zu bestimmten Zeitpunkten, insbesondere regelmäßig, durchgeführt werden. Dies stellt sicher, dass vorzugsweise jede Validatorvorrichtung über sämtliche aktuelle Nutzerdatensätze verfügt. Dies erlaubt es, dass sämtliche aktuelle Nutzerdatensätze von einer Inspektionsvorrichtung von einer beliebigen Validatorvorrichtung empfangen, insbesondere heruntergeladen werden können.

Für den Fall, dass eine oder mehrere Validatorvorrichtung(en) in einer Zugangsanordnung (gate) z.B. in einem Bahnhof integriert sind, kann vorgesehen sein, dass während eines Inspektionsprozesses über die weitere Kommunikationsverbindungverbindung mit dem Datennetz z.B. regelmäßig, insbesondere nahezu kontinuierlich, aktuelle Nutzerdatensätze an eine Inspektionsvorrichtung zu übertragen. Insbesondere können hierbei die Nutzerdatensätze einer Zugangsanordnung mit mehreren Validatorvorrichtungen synchronisiert sein, wie zuvor beschrieben wurde. Dies ermöglicht es einem Inspektor, zumindest eine stichprobenartige Prüfung von Identifikationselementen in einem Bereich hinter der Zugangsschleuse durchzuführen.

Ein noch weiterer Aspekt der Erfindung ist ein Verfahren nach Anspruch 12. Das Verfahren umfasst:
- Überprüfen von einer von einem Inspektionselement über eine erste Nahbereich-Kommunikationsverbindung empfangenen Inspektionskennung durch ein Authentifizierungsmodul einer Validatorvorrichtung,
- Übertragen eines einen Zugang zu einem Datennetz ermöglichenden Kommunikationsdatensatzes an mindestens eine Inspektionsvorrichtung bei einem positiven Authentifizierungsergebnis,
- Herstellen einer Kommunikationsverbindung mit dem Datennetz basierend auf dem übertragenden Kommunikationsdatensatz, und
- Übertragen von mindestens einem in einem Speichermodul der Validatorvorrichtung gespeicherten Nutzerdatensatz an die Inspektionsvorrichtung über die hergestellte Kommunikationsverbindung.

Das Verfahren, insbesondere ein Ticketinspektionsverfahren, kann vorzugsweise zum Betreiben eines zuvor beschriebenen Ticketsystems verwendet werden. Der Kommunikationsdatensatz kann vorzugsweise (indirekt) unter Nutzung des Inspektionselements an die Inspektionsvorrichtung übertragen werden. Auch kann eine direkte Übertragung möglich sein. Beispielsweise kann ein Kommunikationsdatensatz in Form eines QR-Codes direkt von einer visuellen Schnittstelle der Inspektionsvorrichtung erfasst werden.

Ein Modul oder eine Einheit kann zumindest teilweise auf Software und/oder zumindest teilweise aus Hardware gebildet sein. Insbesondere kann eine Vorrichtung/Element geeignete Rechenelemente (z.B. Prozessor, Speicher, etc.) umfassen.

Die Merkmale der Verfahren, Systeme, Anordnungen, Elemente und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Validatorvorrichtung, das erfindungsgemäße Inspektionselement, die erfindungsgemäße Inspektionsvorrichtung, die erfindungsgemäße Inspektionsanordnung, dass erfindungsgemäße Ticketsystem und das erfindungsgemäße Verfahren auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines ersten Ausführungsbeispiels eines Ticketsystems gemäß der vorliegenden Erfindung,

- Fig. 2: eine schematische Ansicht eines weiteren Ausführungsbeispiels eines Ticketsystems gemäß der vorliegenden Erfindung,
- Fig. 3: eine schematische Ansicht eines weiteren Ausführungsbeispiels eines Ticketsystems gemäß der vorliegenden Erfindung,
- Fig. 4: eine schematische Ansicht eines Ausführungsbeispiels einer Validatorvorrichtung gemäß der vorliegenden Erfindung,
- Fig. 5: eine schematische Ansicht eines Ausführungsbeispiels eines Inspektionselements gemäß der vorliegenden Erfindung,
- Fig. 6: eine schematische Ansicht eines Ausführungsbeispiels einer Inspektionsvorrichtung gemäß der vorliegenden Erfindung, und
- Fig. 7: ein Diagramm eines Ausführungsbeispiels eines Verfahrens gemäß der vorliegenden Erfindung.

Nachfolgend werden für gleiche Elemente gleiche Bezugszeichen verwendet.

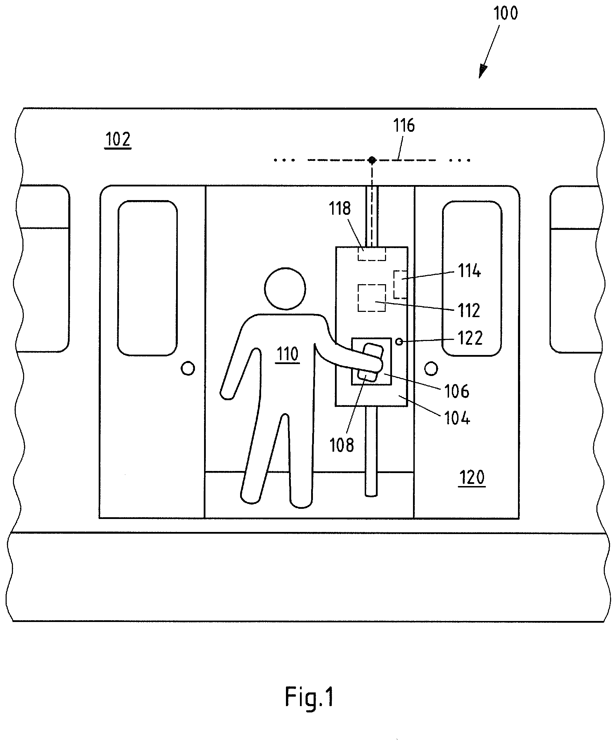

Figur 1 zeigt ein erstes Ausführungsbeispiel eines Ticketsystems 100 gemäß der vorliegenden Erfindung. Wie in Figur 1 zu erkennen ist, ist in einem Fahrzeug 102, insbesondere ein Schienenfahrzeug 102, eine Validatorvorrichtung 104 angeordnet. Die Validatorvorrichtung 104 ist in einem Eingangsbereich, insbesondere in der Nähe einer Fahrzeugtür 120 des Fahrzeugs 102, angeordnet.

Die Validatorvorrichtung 104 umfasst eine erste Nahbereichsschnittstelle 106 in Form einer NFC-Schnittstelle 106. Die NFC-Schnittstelle 106 ist insbesondere eingerichtet, ein Lesefeld auszusenden. Gelangt eine weitere (nicht dargestellte) NFC-Schnittstelle eines Nutzeridentifikationselements 108 in die Reichweite des Lesefelds, kann die NFC-Schnittstelle 106 eine in dem Nutzeridentifikationselement 108 gespeicherte Kennung auslesen bzw. von dem Nutzeridentifikationselement 108 empfangen. Die Kennung kann einem Nutzer 110 des Nutzeridentifikationselements 108 (eindeutig) zugeordnet sein. Eine ausgelesene Kennung kann zusammen mit anderen Daten, wie einem Zeitstempel, einer Ortsangabe (z.B. Ein- und/oder Ausstiegshaltestelle), als Nutzerdatensatz in einem Speichermodul 112 der Validatorvorrichtung 104 gespeichert werden. In anderen Varianten kann ein Speichermodul einer Validatorvorrichtung auch außerhalb des Gehäuses der Validatorvorrichtung angeordnet und beispielsweise über eine drahtgebundene Verbindung mit der Validatorvorrichtung verknüpft sein.

Die Nutzerdatensätze werden vorzugsweise PCI (Payment Card Industry) konform gespeichert und gehandhabt.

Ferner umfasst die Validatorvorrichtung 104 ein Kommunikationsmodul 114 eingerichtet zum Übertragen des mindestens einen Nutzerdatensatzes an eine entfernt angeordnete, zentrale (nicht gezeigte) Rechenvorrichtung. Die Rechenvorrichtung ist insbesondere eingerichtet, eine Abrechnung für die Nutzung des Fahrzeugs zumindest zu initiieren. Beispielsweise kann eine Abbuchung von einem Nutzerkonto abhängig von den gefahrenen Kilometern veranlasst werden.

Darüber hinaus verfügt das dargestellte Schienenfahrzeug 102 über weitere (nicht gezeigte) Validatorvorrichtungen. Vorzugsweise sämtliche Validatorvorrichtungen 104 sind über eine drahtgebundene Kommunikationsverbindung 116, wie ein Fahrzeugbus 116, mittels entsprechenden drahtgebundenen Schnittstellen 118 verbunden. Die Validatorvorrichtungen 104 können über die drahtgebundene Kommunikationsverbindung 116 Daten miteinander austauschen. Insbesondere ist vorzugsweise jede in dem Fahrzeug 102 implementierte Validatorvorrichtung 104 eingerichtet, zumindest die in den jeweiligen Speichermodulen 112 gespeicherten Nutzerdatensätze miteinander zu synchronisieren. Durch den Synchronisationsprozess kann sichergestellt werden, dass vorzugsweise jede Validatorvorrichtung sämtliche für das Fahrzeug 102 relevante Nutzerdatensätze umfasst. Der Synchronisationsprozess kann vorzugsweise zu bestimmten Zeitpunkten, z.B. alle X Sekunden, durchgeführt werden.

Im Normalbetrieb ist bei dem Ticketsystem 100 insbesondere folgender Ablauf vorgesehen. Ein Nutzer 110, der das Fahrzeug 102 betritt, validiert sich mit seinem Nutzeridentifikationselement 108 an der Validatorvorrichtung 104 ("tap-in"). Eine positive Validierung kann dem Nutzer 110 beispielsweise über ein optisches Element 122 (z.B. eine LED oder ein Bildschirm) und/oder ein akustisches Element angezeigt werden. Daraufhin wird von der Validatorvorrichtung 104 ein Nutzerdatensatz erstellt. Der Validierungsvorgang kann beispielsweise eine Prüfung umfassen, ob eine grundsätzlich zulässige Kennung empfangen worden ist. Zusätzlich kann ein Abgleich der empfangenen Kennung mit einer Negativliste durchgeführt werden. Eine positive Validierung liegt insbesondere dann vor, wenn eine zulässige Kennung empfangen worden ist.

Der Nutzerdatensatz wird in dem Speichermodul 112 gespeichert. Ferner wird der Nutzerdatensatz an eine entfernt angeordnete zentrale Rechenvorrichtung übertragen. Beim Ausstieg aus dem Fahrzeug 102 bringt der Nutzer 110 sein Nutzeridentifikationselement (erneut) in ausreichende Nähe zu der NFC-Schnittstelle 106, so dass die Kennung von der NFC-Schnittstelle 106 ausgelesen wird ("tap-out"). Der zu der Kennung gespeicherte Nutzerdatensatz kann angepasst oder ein weiterer Nutzerdatensatz erstellt werden. Der Nutzerdatensatz wird zur weiteren Verarbeitung an die entfernt angeordnete zentrale Rechenvorrichtung übertragen. Insbesondere kann dann eine Abrechnung für die Nutzung des Fahrzeugs im back-office durchgeführt werden.

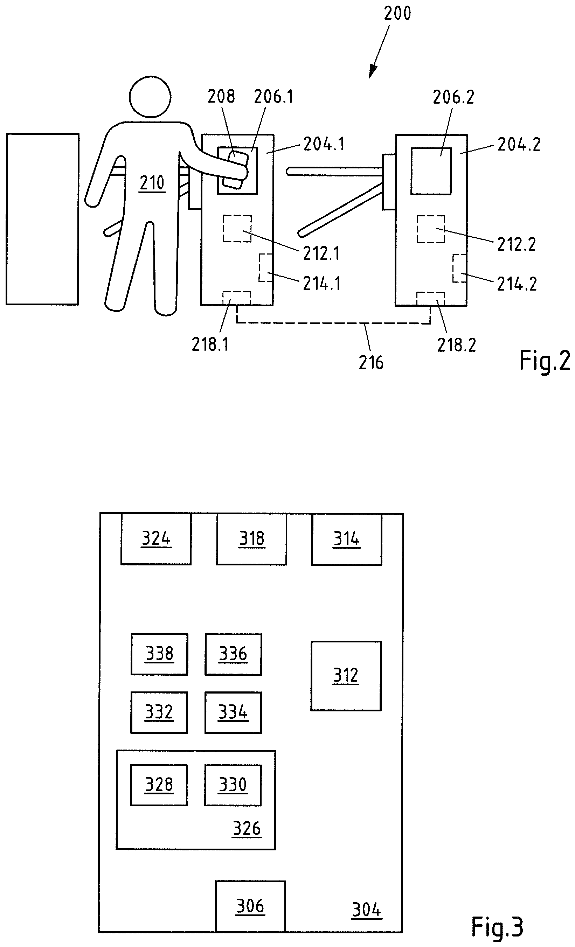

Die Figur 2 zeigt eine weitere schematische Ansicht eines Ticketsystems 200 gemäß der vorliegenden Erfindung. Das dargestellte Ticketsystem 200 umfasst zwei Validatorvorrichtungen 204.1, 204.2. Die Validatorvorrichtungen 204.1, 204.2 sind insbesondere Teil einer Zugangsanordnung für einen bestimmten Bereich. Beispielsweise kann eine derartige Zugangsanordnung in einem Bahnhof angeordnet sein.

Im vorliegenden Beispiel sind zwei Drehkreuze angeordnet, die jeweils eine Drehkreuzsäule sowie zwei oder mehr an der Säule montierte Flügel umfassen. Die Drehkreuzsäule kann insbesondere eine Validatorvorrichtung umfassen. Es versteht sich, dass gemäß anderen Varianten auch andere Zugangsanordnungen, wie Personenschleusen oder dergleichen, vorgesehen sein können.

Eine Validatorvorrichtung 204.1, 204.2 kann (entsprechend der oben beschriebenen Validatorvorrichtung 104) über eine erste Nahbereichsschnittstelle 206.1, 206.2 in Form einer NFC-Schnittstelle 206.1, 206.2, ein Speichermodul 212.1, 212.2, ein Kommunikationsmodul 214.1, 214.2 und eine drahtgebundene Schnittstelle 218.1, 218.2 verfügen. Die Validatorvorrichtungen 204.1, 204.2 sind vorliegend über eine drahtgebundene Kommunikationsverbindung 204.1, 204.2 miteinander verknüpft.

Um einen durch die Zugangsanordnung beschränkten Bereich zu betreten, kann ein Nutzer 210 sich bei einer Validatorvorrichtung 204.1, 204.2 validieren. Bei einem positiven Validierungsergebnis wird das Drehkreuz freigegeben und der Nutzer 210 kann die Zugangsanordnung passieren. Der weitere Ablauf entspricht im Wesentlichen dem bereits in Zusammenhang mit der Figur 1 beschriebenen Ablauf.

Die Figur 3 zeigt ein Blockschaltbild eines Ausführungsbeispiels einer Validatorvorrichtung 304 gemäß der vorliegenden Erfindung. Die dargestellte Validatorvorrichtung 304 kann beispielsweise als Validatorvorrichtung 104 oder 204 in den oben beschriebenen Ticketsystemen eingesetzt werden.

Die Validatorvorrichtung 304 umfasst eine erste Nahbereichsschnittstelle 306 in Form einer NFC-Schnittstelle 306. Die NFC-Schnittstelle 306 ist eingerichtet, eine Inspektionskennung von einem Inspektionselement zu empfangen. Das nachfolgend näher beschriebene Inspektionselement kann zur Übertragung der Inspektionskennung eine dritte Nahbereichsschnittstelle in Form einer NFC-Schnittstelle umfassen.

Eine empfangene Inspektionskennung wird einem Authentifizierungsmodul 326 zur Verfügung gestellt. Das Authentifizierungsmodul 326 umfasst vorliegend ein Vergleichsmodul 328. Das Vergleichsmodul 328 ist eingerichtet, in einem Authentifizierungsprozess eine empfangene Inspektionskennung mit in einem Speichermodul 330 hinterlegten berechtigten Inspektionskennungen zu vergleichen. Ist die Authentifizierung positiv, kann das Vergleichsmodul 328 bewirken, dass ein Schlüsselmodul 332 einen Kommunikationsdatensatz bereitstellt. Der Kommunikationsdatensatz umfasst vorzugsweise eine Datennetzkennung für ein Datennetz, welches durch eine weitere Schnittstelle 324, wie eine weitere Nahbereichsschnittstelle, hergestellt werden kann. Zusätzlich kann der Kommunikationsdatensatz einen Schlüssel für das Datennetz umfassen. Neben einer Anordnung der weiteren Nahbereichsschnittstelle 324 in der Validatorvorrichtung 304 ist auch eine Verbindung zu einer extern angeordneten weiteren Nahbereichsschnittstelle denkbar. Bei einer WLAN-Schnittstelle 324 kann als Kommunikationsdatensatz insbesondere eine statische SSID des WLAN-Datennetzes und ein zufälliges WLAN-Passwort, welches durch das Schlüsselmodul 332 erzeugt werden kann, bereitgestellt werden.

Der Kommunikationsdatensatz kann derart bereitgestellt werden, dass dieser von dem Inspektionselement erfasst werden kann. Vorzugsweise kann der Kommunikationsdatensatz über die erste Nahbereichsschnittstelle 306, vorliegend die NFC-Schnittstelle 306, an das Inspektionselement übertragen werden.

Die Validatorvorrichtung 304 umfasst ferner ein Aktivierungsmodul 334. Das Aktivierungsmodul 334 ist eingerichtet, die vorliegend als WLAN-Schnittstelle 324 gebildete weitere Nahbereichsschnittstelle 324 erst nach einer positiven Authentifizierung zu aktivieren. Das Datennetz wird also erst nach einer positiven Authentifizierung aktiviert. Vorzugsweise kann die WLAN-Schnittstelle 324 von dem Aktivierungsmodul 334 für eine vorgegebene Zeitdauer (z.B. zwischen 0,5 min und 10 min ab der positiven Authentifizierung) aktiviert werden. Hierzu kann das Aktivierungsmodul 334 mit einem Timermodul 336 gekoppelt sein. Nach Ablauf der vorgegebenen Zeitdauer kann die WLAN-Schnittstelle 324 wieder deaktiviert werden.

Optional verfügt die Validatorvorrichtung 304 über ein Sperrmodul 338. Das Sperrmodul 338 ist eingerichtet, die erste Nahbereichsschnittstelle 306 für das Empfangen von in Nutzeridentifikationselementen gespeicherten Kennungen (vorübergehend) zu sperren. Mit anderen Worten wird die Validatorvorrichtung 304 in einen Inspektionsmodus versetzt, in dem eine (nachträgliche) Validierung von einem Nutzer verhindert wird.

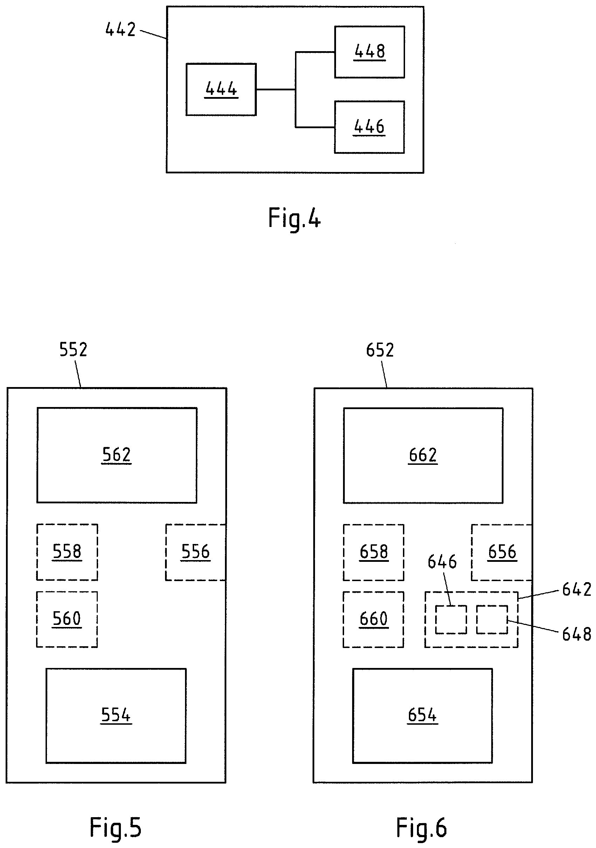

Darüber hinaus ist in der Figur 4 ein Blockschaltbild eines Ausführungsbeispiels eines Inspektionselements 442 gemäß der vorliegenden Erfindung dargestellt. Das Inspektionselement 442 ist vorliegend in Form einer Smartcard 442 gebildet. Die Smartcard 442 umfasst eine Nahbereichsschnittstelle 444, die zumindest zu einer ersten Nahbereichsschnittstelle einer Validatorvorrichtung korrespondiert. Vorzugsweise kann die Nahbereichsschnittstelle 444 eine NFC-Schnittstelle 444 sein.

Über die Nahbereichsschnittstelle 444 kann eine in einer ersten Speichereinheit 446 gespeicherte Inspektionskennung an die erste Nahbereichsschnittstelle der Validatorvorrichtung übertragen werden, also insbesondere von der Validatorvorrichtung ausgelesen werden. Die erste Speichereinheit 446 ist vorzugsweise eine manipulationssichere Speichereinheit 446 in Form eines nicht manipulierbaren Nur-Lese-Speichers 446.

Darüber hinaus umfasst die Smartcard 442 eine weitere, beschreibbare Speichereinheit 448. Vorzugsweise über die Nahbereichsschnittstelle 444 kann ein zuvor beschriebener Kommunikationsdatensatz empfangen werden, der in der Speichereinheit 448 (zwischen)gespeichert werden kann. Vorzugsweise ist die Nahbereichsschnittstelle 444 ferner eingerichtet, den Kommunikationsdatensatz einer Inspektionsvorrichtung über eine zu der Nahbereichsschnittstelle 444 korrespondieren Schnittstelle bereitzustellen.

Die Figur 5 zeigt ein Blockschaltbild eines Ausführungsbeispiels einer Inspektionsvorrichtung 552 gemäß der vorliegenden Erfindung. Die Inspektionsvorrichtung 552 umfasst eine erste Schnittstelle 554, insbesondere eine Nahbereichsschnittstelle 554 in Form einer NFC-Schnittstelle 554. Die NFC-Schnittstelle ist im vorliegenden Fall eingerichtet, sowohl mit Nutzeridentifikationselementen als auch mit dem Inspektionselement zu kommunizieren. Es versteht sich, dass auch zwei oder mehr unterschiedliche Schnittstellen für die Kommunikation mit den Elementen vorgesehen sein können.

Die Nahbereichsschnittstelle 554 der Inspektionsvorrichtung 552 ist eingerichtet, von dem Inspektionselement zumindest den Kommunikationsdatensatz zu empfangen. Insbesondere kann die NFC-Schnittstelle 554 eingerichtet sein, den Kommunikationsdatensatz auszulesen.

Darüber hinaus kann die Inspektionsvorrichtung 552 eine zweite Schnittstelle, wie eine Schnittstelle 556 in Form einer WLAN Schnittstelle 556 umfassen. Der Kommunikationsdatensatz kann der WLAN-Schnittstelle 556 bereitgestellt werden. Mittels der SSID und dem zufälligen Passwort des bereitgestellten Kommunikationsdatensatzes kann die Inspektionsvorrichtung 552, insbesondere die WLAN-Schnittstelle 556, eine WLAN-Kommunikationsverbindung zu dem Datennetz und insbesondere mit der WLAN-Schnittstelle der Validatorvorrichtung herstellen.

Nach Herstellung der weiteren Kommunikationsverbindung mit dem Datennetz kann die Inspektionsvorrichtung 552 die Übertragung von bevorzugt sämtlichen in dem Speichermodul der Validatorvorrichtung gespeicherten Nutzerdatensätzen bewirken. Die übertragenden Nutzerdatensätze können in einem Speichermodul 558 der Inspektionsvorrichtung 552 gespeichert werden. Anschließend kann der Inspektionsprozess gestartet werden.

Während des Inspektionsprozesses kann mittels der NFC-Schnittstelle 554 die in einem Nutzeridentifikationselement gespeicherte Kennung ausgelesen werden. Die ausgelesene Kennung kann einem Vergleichsmodul 560 bereitgestellt werden. Das Vergleichsmodul 560 ist eingerichtet, einen Vergleich der ausgelesenen Kennung mit den in dem Speichermodul 558 gespeicherten Nutzerdatensätzen zu vergleichen. Korrespondiert eine Kennung zu einem Nutzerdatensatz, kann dies beispielsweise über ein Anzeigemodul 562 in Form eines Displays 562 angezeigt werden. In entsprechender Weise kann angezeigt werden, wenn eine ausgelesene Kennung keinem Nutzerdatensatz zugeordnet werden kann.

Die Figur 6 zeigt eine schematische Ansicht eines Ausführungsbeispiels einer Inspektionsvorrichtung 652 mit integriertem Inspektionselement 642.

In diesem Ausführungsbeispiel ist im Unterschied zur Inspektionsvorrichtung 552 gemäß Figur 5 das Inspektionselement 642 beispielsweise in Form eines gesicherten Kartenelements 642 (fest) in der Inspektionsvorrichtung 652 integriert. Neben diesem Unterschied weist die Inspektionsvorrichtung 652 und das Inspektionselement 642 vorliegend nur eine gemeinsam nutzbare erste Nahbereichsschnittstelle 654 auf.

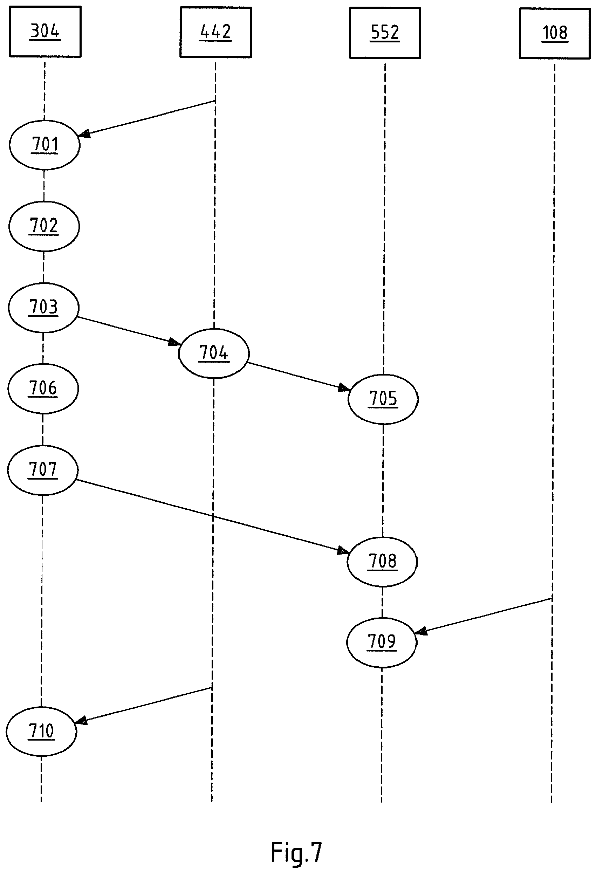

Nachfolgend wird ein beispielhafter Betrieb eines Ticketsystems mit Hilfe der Figur 7 näher erläutert, wobei das Ticketsystem eine Mehrzahl von Validatorvorrichtungen 304 gemäß Figur 3, welche in einem Fahrzeug installiert sind, ein Inspektionselement 442 gemäß Figur 4 und eine Inspektionsvorrichtung 552 gemäß Figur 5 umfasst. Die Figur 7 zeigt ein Ausführungsbeispiels eines Verfahrens gemäß der vorliegenden Erfindung. Bei dem Verfahren handelt es sich insbesondere um ein beispielhaftes Inspektionsverfahren.

Zunächst wird von der Validatorvorrichtung 304 eine Inspektionskennung empfangen (Schritt 701). Vorzugsweise kann die NFC-Schnittstelle 306 ein Lesefeld mit einer begrenzten Reichweite (0 bis wenige cm) aussenden. Ein Inspektor kann sein Inspektionselement 442 in die Reichweite des Lesefelds bringen, damit dessen gespeicherte Inspektionskennung von der NFC-Schnittstelle 306 der Validatorvorrichtung 304 über die NFC-Schnittstelle 444 des Inspektionselements 442 ausgelesen wird. Mit anderen Worten wird die Inspektionskennung von dem Inspektionselement 442 an die Validatorvorrichtung 304 übertragen. Es versteht sich, dass die Übertragung verschlüsselt erfolgen kann.

Nach Empfang der Inspektionskennung wird in Schritt 702 die Inspektionskennung ausgewertet. Insbesondere erfolgt eine Authentifizierungsprüfung durch ein Authentifizierungsmodul 326 der Validatorvorrichtung 304. Vorzugsweise überprüft ein Vergleichsmodul 328, ob die empfangene Inspektionskennung zu einer von bevorzugt einer Mehrzahl von in einem Speichermodul 330 gespeicherten berechtigten Inspektionskennungen korrespondiert. Ist das Authentifizierungsergebnis negativ, kann das Verfahren abgebrochen werden.

Bei einem positiven Authentifizierungsergebnis kann in Schritt 703 ein Kommunikationsdatensatz bereitgestellt werden. Der Kommunikationsdatensatz kann vorzugsweise zumindest eine Datennetzkennung, wie eine Adresse oder eine ID des Datennetzes oder der weiteren Nahbereichsschnittstelle 324 der Validatorvorrichtung 304 und ein kryptographischen Schlüssel für das von der weiteren Nahbereichsschnittstelle 324 bereitgestellte Datennetz umfassen. Bei einer bevorzugten Ausführung der weiteren Nahbereichsschnittstelle 324 als WLAN-Schnittstelle 324 kann die Datennetzkennung eine SSID des WLAN-Datennetzes und der kryptographische Schlüssel ein von einem Schlüsselmodul 332 generiertes zufälliges WLAN-Passwort sein.

In einem Schritt nächsten 704 wird der Kommunikationsdatensatz von dem Inspektionselement 442 empfangen. Insbesondere kann der Kommunikationsdatensatz von der Validatorvorrichtung 304 an das Inspektionselement 442 über die (bereits hergestellte) NFC-Verbindung übertragen werden. Es versteht sich, dass die Übertragung verschlüsselt erfolgen kann. Der Kommunikationsdatensatz kann dann in der weiteren Speichereinheit 448 des Inspektionselements 442 gespeichert werden.

Es versteht sich, dass gemäß anderen Varianten der Erfindung der Kommunikationsdatensatz auch auf anderer Weise übertragen werden kann. Beispielsweise kann der Kommunikationsdatensatz von der Validatorvorrichtung in Form eines QR-Codes auf einem Display der Validatorvorrichtung bereitgestellt werden. Das Inspektionselement und/oder die Inspektionsvorrichtung kann/können ein visuelle Erfassungsmodul zum Erfassen des QR-Codes aufweisen.

In einem nächsten Schritt 705 empfängt die Inspektionsvorrichtung 552 von dem Inspektionselement 442 den Kommunikationsdatensatz. Beispielsweise kann ein Inspektor das Inspektionselement 442 in die Reichweite einer Schnittstelle 554 in Form einer Nahbereichsschnittstelle 554 der Inspektionsvorrichtung 552 bringen. Vorzugsweise ist die Nahbereichsschnittstelle 554 ebenfalls eine NFC-Schnittstelle 554, welche ein Lesefeld mit begrenzter Reichweite (0 bis wenige cm) aussendet. Der Kommunikationsdatensatz kann dann über die NFC-Verbindungvon dem Inspektionselement 442 an die Inspektionsvorrichtung 552 übertragen werden.

Vorzugsweise parallel zu den Schritten 704 und 705 kann nach der positiven Authentifizierung das Sperrmodul 338 in Schritt 706 den Empfang von weiteren in Nutzeridentifikationselementen gespeicherten Kennungen sperren. Beispielsweise kann die erste Nahbereichsschnittstelle 306 für den Empfang von weiteren Kennungen gesperrt werden. Wenn das Ticketsystem zwei oder mehr Validatorvorrichtungen umfasst, kann das Sperrmodul 338 eine Sperrung des Empfangs von weiteren in Nutzeridentifikationselementen gespeicherten Kennungen bei sämtlichen Validatorvorrichtungen bewirken. Insbesondere kann das Sperrmodul 338 die Übertragung einer entsprechenden Nachricht über die drahtgebundene Kommunikationsverbindung 116 bewirken. Es versteht sich, dass der Empfang von weiteren Inspektorkennungen nicht gesperrt wird.

Darüber hinaus wird in Schritt 707 eine Aktivierung des Datennetzes beispielsweise durch eine Aktivierung der WLAN-Schnittstelle 324 von einem Aktivierungsmodul 334 veranlasst. Insbesondere kann die WLAN-Schnittstelle 324 im Normalbetriebsmodus aus Sicherheitsgründen deaktiviert sein. Erst nach einer positiven Authentifizierung einer Inspektionskennung wird die WLAN-Schnittstelle 324 aktiviert. Vorzugsweise wird die WLAN-Schnittstelle 324 und damit das WLAN nur für eine vorgegebene Zeitdauer aktiviert. Die Zeitdauer kann derart vorgegeben werden, dass diese ausreicht, dass stets sämtliche Nutzerdatensätze an die Inspektionsvorrichtung 552 übertragen werden können. Es versteht sich, dass für weitere Anwendungen die WLAN-Schnittstelle 324 zeitweise aktiviert werden kann.

Es versteht ferner sich, dass dieser Schritt auch entfallen kann. Dies kann insbesondere dann der Fall sein, wenn die WLAN-Schnittstelle dauerhaft aktiv ist, die SSID jedoch vor anderen Geräten verborgen bzw. "versteckt" ist.

In einem nächsten Schritt 708 kann die Inspektionsvorrichtung 552 vorzugsweise sämtliche Nutzerdatensätze, die in dem Speichermodul 312 der Validatorvorrichtung gespeichert sind, über das Datennetz empfangen. Nachdem die WLAN-Schnittstelle 324 aktiviert ist kann die WLAN-Schnittstelle 556 der Inspektionsvorrichtung 552 mittels des erhaltenen Kommunikationsdatensatz (z.B. SSID und zufälliges Passwort) eine gesicherte WLAN-Verbindung mit dem WLAN-Datennetz herstellen. Über die WLAN-Verbindung werden dann vorzugsweise sämtliche (aktuelle) Nutzerdatensätze an die Inspektionsvorrichtung 552 übertragen und in dem Speichermodul 558 gespeichert. Für die Übertragung kann die Inspektionsvorrichtung 552 ein proprietäres Protokoll (z.B. REST call) nutzen, um die Liste der Nutzerdatensätze zu empfangen.

Für den Fall, dass ein Ticketsystem zwei oder mehr Validatorvorrichtungen umfasst, kann durch den zuvor beschriebenen Synchronisationsprozess sichergestellt werden, dass jede Validatorvorrichtung sämtliche aktuelle Nutzerdatensätze in nahezu Echtzeit gespeichert hat. Die Inspektionsvorrichtung kann daher sämtliche aktuellen Nutzerdatensätze des Ticketsystems in Schritt 708 empfangen und lokal abspeichern. Anschließend kann der (eigentliche) Inspektionsprozess gestartet werden, und die jeweiligen Nutzeridentifikationselemente 108 der Fahrgäste überprüft werden (Schritt 709). Hierzu kann über die NFC-Schnittstelle 554 die jeweilige Kennung eines Nutzeridentifikationselements 108 ausgelesen und mit den lokal gespeicherten Nutzerdatensätzen verglichen werden, und abhängig von dem Vergleichsergebnis kann ein Inspektionsergebnis ausgegeben werden.

Nachdem der Inspektionsprozess beendet ist, kann in Schritt 710 das Sperrmodul 338 den Empfang von in Nutzeridentifikationselementen 108 gespeicherten Kennungen wieder freigeben. Beispielsweise kann ein Ende des Inspektionsprozesses den Validatorvorrichtungen durch eine erneute Auslesung einer Inspektionskennung oder durch Betätigen einer Funktionstaste mitgeteilt werden. Alternativ oder zusätzlich kann vorgesehen sein, dass automatisch an der nächsten Haltestation des Fahrzeugs und/oder nach Ablauf einer vorgegebenen Zeitdauer der Empfang von in Nutzeridentifikationselementen 108 gespeicherten Kennungen freigegeben wird. Für den Fall, dass die WLAN-Schnittstelle 324 noch aktiviert ist, kann eine Beendigungsinformation über die WLAN-Verbindung übertragen werden. Nach Erhalt einer entsprechenden Information über die Beendigung des Inspektionsprozesses kann die WLAN-Schnittstelle 324 deaktiviert werden.

Es versteht sich, dass zwar die Auslesung von einer Kennung, die in einem Nutzeridentifikationselement 108 gespeichert ist, gesperrt werden kann. Jedoch bleibt das Auslesen von weiteren Inspektorkennungen freigegeben. So ist es möglich, dass sich weitere Inspektoren an dem Inspektionsprozess beteiligen und die entsprechenden Inspektionsvorrichtungen die Nutzerdatensätze in sicherer und korrekter Weise von einer Validatorvorrichtung erhalten können.

Es versteht sich ferner, dass einige der zuvor beschriebenen Schritte zumindest teilweise entfallen, in anderer Reihenfolge oder parallel durchgeführt werden können. Auch versteht es sich, dass alternativ oder zusätzlich das System basierend auf dem EMV ("Europay, MasterCard, and Visa") Standard arbeiten kann.

Es sei angemerkt, dass Nutzerdaten auch unmittelbar mittels der ersten Nahbereichsschnittstelle an ein Inspektionselement und/oder eine Inspektionsvorrichtung übertragen werden können.

## Patentansprüche

1. Validatorvorrichtung (104, 204, 304) für ein Ticketsystem (100, 200), umfassend:
- mindestens eine erste Nahbereichsschnittstelle (106, 206, 306) zum Empfangen einer in einem Nutzeridentifikationselement (108, 208) gespeicherten Kennung,
- wobei die Validatorvorrichtung (104, 204, 304) eingerichtet ist zum Generieren eines Nutzerdatensatzes, basierend auf der empfangenen Kennung und weiteren Daten, umfassend den Empfangszeitpunkt der Kennung,
- ein Speichermodul (312) eingerichtet zum Speichern des mindestens einen zu der von dem Nutzeridentifikationselement (108, 208) empfangenen Kennung korrespondierenden Nutzerdatensatzes,
- mindestens ein Kommunikationsmodul, eingerichtet zum Übertragen des Nutzerdatensatzes an eine entfernt angeordnete zentrale Rechenvorrichtung zur weiteren Verarbeitung,
- wobei die erste Nahbereichsschnittstelle (106, 206, 306) weiter eingerichtet ist zum Empfangen von mindestens einer in einem Inspektionselement (442) gespeicherten Inspektionskennung,
- mindestens ein Authentifizierungsmodul (326) eingerichtet zum Überprüfen der Authentizität der empfangenen Inspektionskennung,
- mindestens ein Schlüsselmodul (332) eingerichtet zum Bereitstellen von einem einen Zugang zu einem Datennetz ermöglichenden Kommunikationsdatensatz bei einem positiven Authentifizierungsergebnis, derart, dass der Kommunikationsdatensatz von dem Inspektionselement (442, 642) empfangbar ist, und
- mindestens eine weitere Nahbereichsschnittstelle (324),
- wobei der Kommunikationsdatensatz Daten umfasst, die für den Aufbau des Datennetzes mit der weiteren Nahbereichsschnittstelle (324) erforderlich sind,
- wobei das Speichermodul (312) zum Bereitstellen des mindestens einen gespeicherten Nutzerdatensatzes eingerichtet ist, derart, dass der mindestens eine Nutzerdatensatz von einer Inspektionsvorrichtung (552, 652) über das Datennetz empfangbar ist.

2. Validatorvorrichtung (104, 204, 304) nach einem der vorherigen Ansprüche, **dadurch gekennzeichnet, dass** der Kommunikationsdatensatz zumindest eine Datennetzkennung des Datennetzes umfasst.

3. Validatorvorrichtung (104, 204, 304) nach Anspruch 2, **dadurch gekennzeichnet, dass** der Kommunikationsdatensatz einen kryptographischen Schlüssel umfasst.

4. Validatorvorrichtung (104, 204, 304) nach Anspruch 2 oder 3, **dadurch gekennzeichnet, dass** die Validatorvorrichtung (104, 204, 304) mindestens ein Aktivierungsmodul (334) eingerichtet zum Aktivieren des Datennetzes nach einem positiven Authentifizierungsergebnis umfasst.

5. Validatorvorrichtung (104, 204, 304) nach Anspruch 2, **dadurch gekennzeichnet, dass** das Aktivierungsmodul (334) ferner zum Aktivieren des Datennetzes für eine vorgegebene Zeitdauer eingerichtet ist.

6. Validatorvorrichtung (104, 204, 304) nach einem der vorherigen Ansprüche, **dadurch gekennzeichnet, dass** die Validatorvorrichtung (104, 204, 304) mindestens ein Sperrmodul (338) umfasst, das eingerichtet ist zum Sperren des Empfangs von einer in einem Nutzeridentifikationselement (108, 208) gespeicherten Kennung nach einem positiven Authentifizierungsergebnis der Inspektionskennung.

7. Inspektionselement (442, 642) für eine Inspektionsvorrichtung (552, 652) für ein Ticketsystem (100, 200), umfassend:
- mindestens eine erste Speichereinheit (446, 646) eingerichtet zum Speichern von mindestens einer Inspektionskennung,
- mindestens eine Nahbereichsschnittstelle (444) eingerichtet zum Übertragen der Inspektionskennung an eine erste Nahbereichsschnittstelle (106, 206, 306) einer Validatorvorrichtung (104, 204, 304) nach einem der vorherigen Ansprüche,
- wobei das Inspektionselement (442, 642) eingerichtet ist zum Empfangen von mindestens einem von der Validatorvorrichtung (104, 204, 304) bereitgestellten und einen Zugang zu einem Datennetz ermöglichenden Kommunikationsdatensatz der Validatorvorrichtung (104, 204, 304).

8. Inspektionselement (442, 642) nach Anspruch 7, **dadurch gekennzeichnet, dass** das Inspektionselement (442, 642) zum Bereitstellten des empfangenen Kommunikationsdatensatzes eingerichtet ist, derart, dass der Kommunikationsdatensatz von der Inspektionsvorrichtung (552, 652) empfangbar ist.

9. Inspektionsvorrichtung (552, 652) für ein Ticketsystem (100, 200), umfassend:
- mindestens eine erste Schnittstelle (554) eingerichtet zum Empfangen von mindestens einem einen Zugang zu einem Datennetz ermöglichenden Kommunikationsdatensatz einer Validatorvorrichtung (104, 204, 304) nach einem der Ansprüche 1 bis 6,
- mindestens eine zweite Schnittstelle (556, 656) eingerichtet zum Herstellen einer Kommunikationsverbindung mit dem Datennetz basierend auf dem empfangenen Kommunikationsdatensatz,
- wobei die zweite Schnittstelle (556, 656) eingerichtet ist zum Empfangen von mindestens einem Nutzerdatensatz von der Validatorvorrichtung (104, 204, 304) über die hergestellte Kommunikationsverbindung, und
- wobei die Inspektionsvorrichtung (552, 652) zum Durchführen eines Inspektionsprozesses eingerichtet ist, wobei in dem Inspektionsprozess eine von einem Nutzeridentifikationselement (108, 208) ausgelesene Kennung mit dem mindestens einen empfangenen Nutzerdatensatz geprüft wird.

10. Inspektionsanordnung für ein Ticketsystem (100, 200), umfassend:
- mindestens ein Inspektionselement (442, 642) nach einem der Ansprüche 7 oder 8, und
- mindestens eine Inspektionsvorrichtung (552, 652) nach Anspruch 9.

11. Ticketsystem (100, 200), umfassend:
- mindestens eine Validatorvorrichtung (104, 204, 304) nach einem der Ansprüche 1 bis 6, und
- mindestens eine Inspektionsanordnung nach Anspruch 10.

12. Verfahren zum Betreiben eines Ticketsystems (100, 200), wobei das Ticketsystem mindestens eine Validatorvorrichtung (104, 204, 304) mit mindestens einer ersten Nahbereichsschnittstelle (106, 206, 306) zum Empfangen einer in einem Nutzeridentifikationselement (108, 208) gespeicherten Kennung umfasst, wobei die Validatorvorrichtung (104, 204, 304) eingerichtet ist zum Generieren eines Nutzerdatensatzes, basierend auf der empfangenen Kennung und weiteren Daten, umfassend den Empfangszeitpunkt der Kennung, wobei die Validatorvorrichtung (104, 204, 304) ein Kommunikationsmodul umfasst, eingerichtet zum Übertragen des Nutzerdatensatzes an eine entfernt angeordnete zentrale Rechenvorrichtung zur weiteren Verarbeitung, wobei die Validatorvorrichtung ein Speichermodul (312) umfasst, eingerichtet zum Speichern der mindestens einen zu der von dem Nutzeridentifikationselement (108, 208) empfangenen Kennung korrespondierenden Nutzerdatensatz umfasst, und wobei die Validatorvorrichtung (104, 204, 304) mindestens eine weitere Nahbereichsschnittstelle (324) umfasst, umfassend:
- Überprüfen von einer von einem Inspektionselement (442, 642) über eine erste Nahbereich-Kommunikationsverbindung empfangenen Inspektionskennung durch ein Authentifizierungsmodul (326) einer Validatorvorrichtung (104, 204, 304),
- Übertragen eines einen Zugang zu einem Datennetz ermöglichenden Kommunikationsdatensatzes an mindestens eine Inspektionsvorrichtung (552, 652) bei einem positiven Authentifizierungsergebnis, wobei der Kommunikationsdatensatz Daten umfasst, die für den Aufbau des Datennetzes mit der weiteren Nahbereichsschnittstelle (324) erforderlich sind,
- Herstellen einer Kommunikationsverbindung mit dem Datennetz basierend auf dem übertragenden Kommunikationsdatensatz,
- Übertragen von mindestens einem in einem Speichermodul (312) der Validatorvorrichtung (104, 204, 304) gespeicherten Nutzerdatensatz an die Inspektionsvorrichtung (552, 652) über die hergestellte Kommunikationsverbindung, und
- Durchführen eines Inspektionsprozesses durch die Inspektionsvorrichtung (552, 652), wobei in dem Inspektionsprozess eine von einem Nutzeridentifikationselement (108, 208) ausgelesene Kennung mit dem mindestens einen übertragenen Nutzerdatensatz geprüft wird.

## Claims

1. Validator device (104, 204, 304) for a ticket system (100, 200), comprising:
- at least one first short-range interface (106, 206, 306) configured to receive at least one identifier stored in a user identification element (108, 208),
- wherein the validator device (104, 204, 304) is configured to generate a user data set based on the received identifier and further data comprising the time of receipt of the identifier,
- a memory module (312) configured to store the at least one user data set corresponding to the identifier received from the user identification element (108, 208),
- at least one communication module configured to transmit the user data set to a remotely located central computing device for further processing,
- wherein the first short-range interface (106, 206, 306) is further configured to receive at least one inspection identifier stored in an inspection element (442),
- at least one authentication module (326) configured to verify the authenticity of the received inspection identifier,
- at least one key module (332) configured to provide a communication data set enabling access to a data network upon a positive authentication result, such that the communication data set is receivable by the inspection element (442, 642), and
- at least one further short-range interface (324),
- wherein the communication data set comprises data required to establish the data network with the further short range interface (324),
- wherein the memory module (312) is configured to provide the at least one stored user data set such that the at least one user data set is receivable by an inspection device (552, 652) via the data network.

2. Validator device (104, 204, 304) according to any one of the preceding claims, **characterized in that** the communication data set comprises at least one data network identifier of the data network.

3. Validator device (104, 204, 304) according to claim 2, **characterized in that** the communication data set comprises a cryptographic key.

4. Validator device (104, 204, 304) according to claim 2 or 3, **characterized in that** the validator device (104, 204, 304) comprises at least one activation module (334) configured to activate the data network after a positive authentication result.

5. Validator device (104, 204, 304) of claim 2, **characterized in that** the activation module (334) is further configured to activate the data network for a predetermined period of time.

6. Validator device (104, 204, 304) according to any one of the preceding claims, **characterized in that** the validator device (104, 204, 304) comprises at least one blocking module (338) configured to block the reception of an identifier stored in a user identification element (108, 208) after a positive authentication result of the inspection identifier.

7. Inspection element (442, 642) for an inspection device (552, 652) for a ticket system (100, 200), comprising:
- at least one first memory unit (446, 646) configured to store at least one inspection identifier,
- at least one short-range interface (444) configured to transmit the inspection identifier to a short-range interface (106, 206, 306) of a validator device (104, 204, 304) according to any one of the preceding claims,
- wherein the inspection element (442, 642) is configured to receive at least one communication data set provided by the validator device (104, 204, 304) and enabling access to a data network from the validator device (104, 204, 304).

8. Inspection element (442, 642) according to claim 7, **characterized in that** the inspection element (442, 642) is configured to provide the received communication data set, such that the communication data set is receivable by the inspection device (552, 652).

9. Inspection device (552, 652) for a ticket system (100, 200), comprising:
- at least a first interface (554) configured to receive at least one communication data set enabling access to a data network from a validator device (104, 204, 304) according to any one of claims 1 to 6,
- at least one second interface (556, 656) configured to establish a communication link with the data network based on the received communication data set,
- wherein the second interface (556, 656) is configured to receive at least one user data set from the validator device (104, 204, 304) via the established communication link, and
- wherein the inspection device (552, 652) is configured to perform an inspection process, wherein in the inspection process an identifier read from a user identification element (108, 208) is checked against the at least one received user data set.

10. Inspection arrangement for a ticket system (100, 200), comprising:
- at least one inspection element (442, 642) according to any one of claims 7 or 8, and
- at least one inspection device (552, 652) according to claim 9.

11. Ticket system (100, 200), comprising:
- at least one validator device (104, 204, 304) according to any one of claims 1 to 6, and
- at least one inspection arrangement according to claim 10.

12. A method of operating a ticketing system (100, 200), wherein the ticketing system comprises at least one validator device (104, 204, 304) having at least one first short-range interface (106, 206, 306) for receiving an identifier stored in a user identification element (108, 208), wherein the validator device (104, 204, 304) is configured to generate a user data set based on the received identifier and further data comprising the time of receipt of the identifier, wherein the validator device (104, 204, 304) comprises a communication module configured to transmit the user data set to a remotely located central computing device for further processing, wherein the validator device comprises a memory module (312) configured to store the at least one user data set corresponding to the identifier received from the user identification element (108, 208), and wherein the validator device (104, 204, 304) comprises at least one further short range interface (324), comprising:
- checking an inspection identifier received from an inspection element (442, 642) via a first short-range communication link by an authentication module (326) of a validator device (104, 204, 304),
- transmitting a communication data set enabling access to a data network to at least one inspection device (552, 652) upon a positive authentication result, wherein the communication data set comprises data required for establishing the data network with the further short range interface (324),
- establishing a communication link with the data network based on the transmitted communication data set,
- transmitting at least one user data set stored in a memory module (312) of the validator device (104, 204, 304) to the inspection device (552, 652) via the established communication link, and
- performing an inspection process by the inspection device (552, 652), wherein in the inspection process an identifier read from a user identification element (108, 208) is checked against the at least one transmitted user set.

## Revendications

1. Dispositif de validation (104, 204, 304) pour un système de tickets (100, 200), comprenant :
- au moins une première interface de proximité (106, 206, 306) pour recevoir un identifiant stocké dans un élément d'identification d'utilisateur (108, 208),
- dans lequel le dispositif de validation (104, 204, 304) est adapté pour générer un ensemble de données utilisateur sur la base de l'identifiant reçu et de données supplémentaires comprenant l'heure de réception de l'identifiant,
- un module de stockage (312) adapté pour stocker l'au moins un ensemble de données utilisateur correspondant à l'identifiant reçu de l'élément d'identification utilisateur (108, 208)
- au moins un module de communication agencé pour transmettre l'ensemble de données utilisateur à un dispositif informatique central situé à distance pour un traitement supplémentaire,
- dans lequel la première interface de proximité (106, 206, 306) est en outre adaptée pour recevoir au moins un identifiant d'inspection stocké dans un élément d'inspection (442),
- au moins un module d'authentification (326) adapté pour vérifier l'authenticité de l'identifiant d'inspection reçu,
- au moins un module de clé (332) agencé pour fournir un ensemble de données de communication permettant un accès à un réseau de données dans le cas d'un résultat d'authentification positif, de sorte que l'ensemble de données de communication peut être reçu par l'élément d'inspection (442, 642), et
- au moins une interface de proximité supplémentaire (324),
- dans lequel l'ensemble de données de communication comprend des données nécessaires pour établir le réseau de données avec l'interface de proximité supplémentaire (324),
- dans lequel le module de stockage (312) est agencé pour fournir l'au moins un ensemble de données utilisateur stocké, de sorte que l'au moins un ensemble de données utilisateur puisse être reçu par un dispositif d'inspection (552, 652) via le réseau de données.

2. Dispositif de validation (104, 204, 304) selon l'une des revendications précédentes, **caractérisé en ce que** l'ensemble de données de communication comprend au moins un identifiant de réseau de données du réseau de données.

3. Dispositif de validation (104, 204, 304) selon la revendication 2, **caractérisé en ce que** l'ensemble de données de communication comprend une clé cryptographique.

4. Dispositif de validation (104, 204, 304) selon la revendication 2 ou 3, **caractérisé en ce que** le dispositif de validation (104, 204, 304) comprend au moins un module d'activation (334) adapté pour activer le réseau de données après un résultat d'authentification positif.

5. Dispositif de validation (104, 204, 304) selon la revendication 2, **caractérisé en ce que** le module d'activation (334) est en outre adapté pour activer le réseau de données pendant une période de temps prédéterminée.

6. Dispositif de validation (104, 204, 304) selon l'une des revendications précédentes, **caractérisé en ce que** le dispositif de validation (104, 204, 304) comprend au moins un module de blocage (338) adapté pour bloquer la réception d'un identifiant stocké dans un élément d'identification d'utilisateur (108, 208) après un résultat positif d'authentification de l'identifiant d'inspection.

7. Élément d'inspection (442, 642) pour un dispositif d'inspection (552, 652) pour un système de tickets (100, 200), comprenant :
- au moins une première unité de stockage (446, 646) adaptée pour stocker au moins un identifiant d'inspection,
- au moins une interface de proximité (444) adaptée pour transmettre l'identifiant d'inspection à une première interface de proximité (106, 206, 306) d'un dispositif de validation (104, 204, 304) selon l'une des revendications précédentes,
- dans lequel l'élément d'inspection (442, 642) est adapté pour recevoir au moins un ensemble de données de communication du dispositif de validation (104, 204, 304) fourni par le dispositif de validation (104, 204, 304) et permettant un accès à un réseau de données.

8. Élément d'inspection (442, 642) selon la revendication 7, **caractérisé en ce que** l'élément d'inspection (442, 642) est agencé pour fournir l'ensemble de données de communication reçu, de sorte que l'ensemble de données de communication peut être reçu par le dispositif d'inspection (552, 652).

9. Dispositif d'inspection (552, 652) pour un système de tickets (100, 200), comprenant :
- au moins une première interface (554) adaptée pour recevoir au moins un ensemble de communication d'un dispositif de validation (104, 204, 304) selon l'une des revendications 1 à 6, permettant un accès à un réseau de données,
- au moins une seconde interface (556, 656) agencée pour établir une liaison de communication avec le réseau de données sur la base de l'ensemble de données de communication reçu,
- dans lequel la deuxième interface (556, 656) est adaptée pour recevoir au moins un ensemble de données d'utilisateur du dispositif de validation (104, 204, 304) via la liaison de communication établie, et
- dans lequel le dispositif d'inspection (552, 652) est agencé pour exécuter un processus d'inspection, dans lequel processus d'inspection un identifiant lu par un élément d'identification d'utilisateur (108, 208) est vérifié avec l'au moins un ensemble de données d'utilisateur transmis.

10. Agencement d'inspection pour un système de tickets (100, 200), comprenant
- au moins un élément d'inspection (442, 642) selon l'une des revendications 7 ou 8, et
- au moins un dispositif d'inspection (552, 652) selon la revendication 9.

11. Système de tickets (100, 200), comprenant:
- au moins un dispositif de validation (104, 204, 304) selon l'une des revendications 1 à 6, et
- au moins un agencement d'inspection selon la revendication 10.

12. Procédé d'exploitation d'un système de tickets (100, 200),
- où le système de tickets comprend au moins un dispositif de validation (104, 204, 304) avec au moins une première interface de proximité (106, 206, 306) pour recevoir un identifiant stocké dans un élément d'identification d'utilisateur (108, 208),
- où le dispositif de validation (104, 204, 304) est agencé pour générer un ensemble de données utilisateur sur la base de l'identifiant reçu et de données supplémentaires comprenant l'heure de réception de l'identifiant,
- où le dispositif de validation (104, 204, 304) comprend un module de communication adapté pour transmettre l'ensemble de données utilisateur à un dispositif informatique central situé à distance pour un traitement supplémentaire,
- où le dispositif de validation comprend un module de stockage (312) adapté pour stocker l'au moins un ensemble de données utilisateur correspondant à l'identifiant reçu de l'élément d'identification utilisateur (108, 208), et
- où le dispositif de validation (104, 204, 304) comprend au moins une autre interface de proximité (324)
comprenant :
- vérifier, par un module d'authentification (326) d'un dispositif de validation (104, 204, 304), un identifiant d'inspection reçu d'un élément d'inspection (442, 642) via une première liaison de communication de proximité,
- transmettre un ensemble de données de communication permettant un accès à un réseau de données à au moins un dispositif d'inspection (552, 652) dans le cas d'un résultat d'authentification positif, l'ensemble de données de communication comprenant des données nécessaires pour établir le réseau de données avec l'interface de proximité supplémentaire (324),
- établir une liaison de communication avec le réseau de données sur la base de l'ensemble de données de communication transmis,
- transmettre au moins un ensemble de données utilisateur stocké dans un module de stockage (312) du dispositif de validation (104, 204, 304) au dispositif d'inspection (552, 652) via la liaison de communication établie, et
- exécuter un processus d'inspection au moyen du dispositif d'inspection (552, 652), dans lequel processus d'inspection un identifiant lu par un élément d'identification d'utilisateur (108, 208) est vérifié avec l'au moins un ensemble de données d'utilisateur transmis.
